# EUROPÄISCHE PATENTSCHRIFT

(11) **EP 3 316 347 B1**
(45) Veröffentlichungstag und Bekanntmachung des Hinweises auf die Patenterteilung: **12.06.2019**
(21) Anmeldenummer: 17195885.3
(22) Anmeldetag: 11.10.2017
(51) Int. Cl.: H01M 2/16, H01M 10/052, H01M 10/0567, H01M 10/058

(54) **SEKUNDÄRBATTERIE UND VERFAHREN ZUM HERSTELLEN EINER SOLCHEN**
SECONDARY BATTERY AND METHOD FOR PRODUCING THE SAME
BATTERIE SECONDAIRE ET PROCÉDÉ DE FABRICATION DE CETTE DERNIÈRE

(30) Priorität: 28.10.2016 DE 102016221256
(43) Veröffentlichungstag der Anmeldung: 02.05.2018
(73) Patentinhaber: Robert Bosch GmbH, 70442 Stuttgart (DE)
(72) Erfinder: Bauer, Harald, 71139 Ehningen (DE); Hackenberg, Juergen, 74343 Sachsenheim (DE); Lindner, Peter, 74372 Sersheim (DE)

(56) Entgegenhaltungen:
- DE-A1-102013 021 228
- US-A1- 2013 059 193
- US-A1- 2015 093 635

## Beschreibung

Die vorliegende Erfindung betrifft eine Sekundärbatterie, wie beispielsweise eine Lithium-Ionen-Batterie. Die vorliegende Erfindung betrifft ferner ein Verfahren zum Herstellen einer solchen Batterie.

### Stand der Technik

Sekundärbatterien, wie beispielsweise Lithium-Ionen-Akkumulatoren, sind weit verbreitet. Anwendungsbeispiele umfassen neben Unterhaltungselektronik beispielsweise elektrisch angetriebene Fahrzeuge. Bei dem Betrieb von Sekundärbatterien kann bei einem Lade- oder Entladevorgang eine Dendritbildung auftreten, welche für den Betrieb und die Sicherheit der Batterie nachteilig sein kann.

Wichtigkeit bei der Ausbildung der Batterien kommt beispielsweise der Verwendung von Elektrolytsystemen und entsprechenden Ausgestaltungen von Batteriezellen zu. Elektrolyte oder ionenleitende Separatoren, die mit Elektrolyt gefüllt sind, werden insbesondere gemäß dem Stand der Technik meist nach makroskopischen beziehungsweise integralen Gesichtspunkten ausgewählt, also etwa den elektrischen Eigenschaften oder der chemischen Eignung im vorgesehenen Potentialbereich. Entsprechende ionenleitende Polymerelektrolyten sind beispielsweise beschrieben in den Dokumenten DE 693 32 598 T2, DE 601 18 618 T2 und EP 0 971 427 A1.

Ferner sind aus WO 02/061776 A2 und WO 03/081620 A1 Elektrolytlösungen bekannt.

Es ist ferner bekannt, eine Lithium-Metallanode und/oder eine Kupferableiterfolie zu strukturieren, um die Dendritbildung zu reduzieren. Eine entsprechende Strukturierung der Elektroden ist beispielsweise beschrieben in Park, J., Jeong, J., Lee, Y., Oh, M., Ryou, M. H., & Lee, Y. M. (2016), "Micro-Patterned Lithium Metal Anodes with Suppressed Dendrite Formation for Post Lithium-Ion Batteries", Advanced Materials Interfaces, 3(11).

Das Dokument GB 2 242 440 A beschreibt grundsätzlich das elektrochemische Abscheiden von Lithium.

Das Dokument DE 10 2013 021228 A1 offenbart eine Batteriezelle, die eine Anode und eine Kathode aufweist, zwischen denen ein ionenleitender Separator angeordnet ist, dadurch gekennzeichnet, dass der Separator ein polarisiertes piezoelektrisch aktives Material aufweist, wie zum Beispiel eine polarisierte Polyvinylidenfluorid-Folie.

### Offenbarung der Erfindung

Die vorliegende Erfindung betrifft eine Sekundärbatterie aufweisend eine Anode, eine Kathode und gegebenenfalls einen zwischen Anode und Kathode angeordneten Separator, wobei ferner ein Elektrolyt vorgesehen ist, der wenigstens eine von der Anode und der Kathode kontaktiert, und wobei in dem Elektrolyt ein Additiv vorgesehen ist, das in dem Elektrolyt, wie etwa einer Elektrolytmatrix, unlöslich ist und das eine zu der Elektrolytmatrix des Elektrolyten verschiedene elektrische Suszeptibilität aufweist, dadurch gekennzeichnet, dass das Additiv zumindest teilweise zwischen dem Separator und der Anode oder zwischen dem Separator und der Kathode angeordnet ist.

Eine vorbeschriebene Sekundärbatterie weist insbesondere Vorteile bezüglich ihres Zyklisierungsverhaltens auf, also des Verhaltens bei einem mehrmaligen Laden beziehungsweise Entladen.

Unter einer Sekundärbatterie kann dabei in an sich bekannter Weise ein wieder aufladbarer Akkumulator verstanden werden.

Die vorbeschriebene Sekundärbatterie weist eine Anode, eine Kathode und insbesondere einen zwischen Anode und Kathode angeordneten Separator auf.

Für den beispielhaften Fall einer Lithium-Ionen-Batterie, welche erfindungsgemäß bevorzugt sein kann, kann die Anode beispielsweise umfassen oder ausgestaltet sein aus metallischem Lithium oder aus einem Material, welches Lithiumionen einlagern beziehungsweise interkalieren und wieder auslagern beziehungsweise deinterkalieren kann. Ein derartiges Anodenmaterial kann beispielsweise auf einen Stromableiter aufgebracht, wie etwa aufgerakelt, sein. Beispielhafte Anodenmaterialien umfassen Graphit oder Lithiumtitanat und/oder der Stromableiter kann beispielsweise aus Kupfer, etwa als Kupferfolie, ausgestaltet sein. Die Kathode kann, ebenfalls für den rein beispielhaften Fall einer Lithium-Ionen Batterie, Nickel-Mangan-Kobalt-Oxid (NMC) oder Lithium-Cobalt-Oxid (LiCoO₂) aufweisen oder daraus bestehen und ebenfalls auf einen Stromableiter, etwa aus Aluminium, beispielsweise Aluminiumfolie, aufgebracht sein. Dabei kann das Kathodenmaterial wie auch das Anodenmaterial gegebenenfalls in einem Binder, wie beispielsweise Polyvinylidenfluorid (PVDF) etwa zusammen mit einem Leitzusatz, wie etwa einer elektrisch leitfähigen Kohlenstoffverbindung, beispielsweise Graphit, vorliegen.

Der Separator kann beispielsweise eine insbesondere poröse Kunststofffolie sein, etwa gebildet aus Polypropylen. Ferner kann der Separator aus einem Vlies ausgebildet sein.

Beispielsweise kann sich ein Elektrolyt in den Poren des Separators und etwa zwischen den Elektroden befinden. Dabei kann der Elektrolyt nur die Anode, die Kathode oder beide Elektroden kontaktieren, wobei gegebenenfalls verschiedene Elektrolytsysteme vorgesehen sein können, ohne den Rahmen der Erfindung zu verlassen. Der Elektrolyt kann ebenfalls in an sich bekannter Weise ein Festkörperelektrolyt sein oder ein Flüssigelektrolyt und als solcher beispielsweise ein Lösungsmittel umfassen, in dem ein oder mehrere elektrisch leitfähige Salze gelöst sind. Beispielsweise können aprotische Lösungsmittel, wie etwa Ethylencarbonat, Propylencarbonat, Dimethylcarbonat oder Diethylcarbonat Verwendung finden. Weiterhin kann als elektrisch leitfähiges Salz beispielsweise Lithiumhexafluorophosphat (LiPF₆) verwendet werden.

Die Leistungsfähigkeit, insbesondere die Energiedichte beispielsweise von Lithium Ionen Batterien (LIB) hängt wesentlich von der Wahl und der Gestaltung der Elektroden in der Zelle ab. Angegeben wird in der Regel für die Ströme an den Klemmen der Batterie die sogenannte C-Rate. Diese ist definiert als Vielfaches der nominellen Batteriekapazität. Beispielsweise, wenn eine Batterie 5A für eine Stunde im zulässigen materialabhängigen Spannungsbereich liefern kann, beträgt die Kapazität 5Ah und die C-Rate beim Laden und Entladen mit 5A wird mit 1C beschrieben. Laden oder Entladen mit 10A wird als 2C beschrieben und so weiter. Dieser Wert ist ein volumen- oder massenspezifischer Wert, da der Strom auf die in der Zelle vorhandene Materialmenge bezogen ist. Je nach Material der Anoden- und Kathodenelektroden fällt die Kapazität unterschiedlich aus. Elektrochemisch relevant für den Transport der Lithium-Ionen ist jedoch insbesondere der Strom pro Fläche. Deshalb sind in der Batterie die Elektrodenmaterialien meist flächig auf Metallfolien aufgebracht. Dabei bilden Anode und Kathode über einen Separator getrennte Paare. Beim Zelldesign wird je nach Anwendung, Material und Fertigungsverfahren die benötigte Materialmenge folglich auf eine in Grenzen frei zu wählende Fläche verteilt. Der integral auf die Zelle aufgebrachte Strom wird folglich auf eine Fläche als Stromdichte zwischen der Anode und der Kathode realisiert.

Bei der Abscheidung von Metallen aus Flüssigkeiten werden Ionen zu den Elektroden transportiert und ändern dort ihren Ladungszustand. Beim Laden nimmt Lithium als Li+ an der Anode ein Elektron auf und lagert sich dort als metallisches Lithium ab.

Damit diese Vorgänge wie gewünscht funktionieren, muss erstens der Elektrolyt, wie etwa die Flüssigkeit, eine ionische Leitfähigkeit aufweisen und zweitens der Vorgang an der Elektrode möglichst wenig etwa durch passive Schichten behindert werden. Die Ionen bewegen sich dabei entlang der elektrischen Feldlinien und enden an idealen Oberflächen senkrecht. Damit diese Vorgänge über eine integrale Fläche gleichmäßig an jedem Ort und zu jeder Zeit funktionieren, sollten lokal keine dominanten Störungen auftreten beziehungsweise sollten derartige Störungen lediglich begrenzt sein.

Passivschichten oder teildurchlässige Schichten wie Solid Elektrolyte Interface (SEI) bei Lithium-Ionen Batterien behindern dabei die Ausbildung eines idealen elektrischen Feldes. Defekte in der SEI führen dazu, dass dort lokal die elektrische Leitfähigkeit besser ist und sich die Feldlinien dort verdichten und lokal ein schnelleres Lithiumwachstum in Form von Dendriten auftritt - wie dies von anderen galvanischen Abscheidungen bekannt ist.

Die Herstellung einer perfekten Lithium-Metalloberfläche mit ideal identischen Abständen zwischen Kathode und Anode und eine ideal homogene SEI zu jedem Zeitpunkt in jedem Ladezyklus sind praktisch nicht umsetzbar, weshalb es oftmals zu Dendritenwachstum mit den damit verbundenen potentiellen Nachteilen etwa eines elektrischen Kurzschlusses oder aber eines Ladungsverlusts kommen kann.

So kann es oftmals nicht ganz verhindert werden, dass bei der Verwendung metallischer Lithium-Anoden beim Laden insbesondere mit höheren C-Raten häufig eine unkontrollierte Dentritbildung in Batterien insbesondere mit flüssigem Elektrolyt auftritt, die dazu führt, dass die metallischen Dendrite den Separator perforieren können und hierdurch einen Kurzschluss verursachen. Gefahr hierbei ist insbesondere bei flüssigen Elektrolyten die Brandgefahr. Dies kann beispielsweise reduziert werden durch mit Polystyrol (PS) gefüllte Festelektrolyte.

Ferner kann Dendritbildung zu Zyklisierungsverlusten führen, bei denen Lithium nicht mehr für den Ladungswechsel zur Verfügung steht, da Dendrite abbrechen können und die abgebrochenen Dendrite nicht mehr am elektrochemischen Ladungswechsel teilnehmen können und so nicht mehr die volle maximale Batteriekapazität zur Verfügung steht.

Um den vorgenannten Nachteilen zu begegnen, ist es bei der vorbeschriebenen Sekundärbatterie vorgesehen, dass in dem Elektrolyt ein Additiv vorgesehen ist, das in dem Elektrolyt unlöslich ist, das vorzugsweise polar oder polarisierbar ist und das eine zu dem Elektrolyten verschiedene elektrische Suszeptibilität aufweist.

Insbesondere durch das vorbeschriebene Additiv, welches bevorzugt in fester Form vorliegen kann, kann eine Dendritbildung reduziert werden. Hierzu kann insbesondere das Additiv benachbart zu wenigstens einer Elektrode, etwa der Anode, vorliegen.

Die elektrische Suszeptibilität ist bekannter Maßen eine Materialeigenschaft, welche die Fähigkeit zur elektrischen Polarisierung in einem eingeprägten elektrischen Feld angibt. Sie ist eine dimensionslose Proportionalitätskonstante, die das Verhältnis von dielektrischer Verschiebung (Polarisierung) zu elektrischer Feldstärke zeigt.

Dass das Additiv in dem Elektrolyt beziehungsweise der Elektrolytmatrix unlöslich ist kann ferner bedeuten, dass es etwa in einem Flüssigelektrolyt oder einem Festkörperelektrolyt bei Raumtemperatur (22°C) oder auch bei den Arbeitsbedingungen der Batterie zumindest teilweise als separate Phase vorliegt.

Grundsätzlich ist es dabei vorgesehen, dass das Additiv zumindest teilweise zwischen dem Separator und der Anode oder zwischen dem Separator und der Kathode angeordnet ist. In dieser Ausgestaltung kann das Additiv somit zusätzlich zu einem zusätzlichen Separator vorgesehen sein und insbesondere zwischen Separator und Anode einer Lithium-Ionen-Batterie angeordnet sein.

Alternativ kann es vorgesehen sein, dass der Separator durch das Additiv gebildet wird beziehungsweise das Additiv die Funktion eines Separators wahrnimmt. In dieser Ausgestaltung kann somit auf das Vorsehen eines zusätzlichen Separators verzichtet werden. Diese Ausgestaltung kann insbesondere von Vorteil sein, wenn, wie dies grundsätzlich und unabhängig der jeweiligen Ausgestaltung möglich sein kann, das Additiv elektrisch isolierende Partikel aufweist.

Dadurch, dass das vorbeschriebene Additiv Bestandteil des Elektrolyten ist, kann dieses in Kontakt mit der Oberfläche der Elektroden gelangen und so eine Struktur auf die Oberfläche der Lithiumschicht der Elektrode aufbringen beziehungsweise ausbilden.

Durch eine durch das Additiv erzeugte Strukturierung der Oberfläche der Lithiumschicht insbesondere im Nanometerbereich mit den eng definierten elektrischen Eigenschaften kann es in überraschender Weise ermöglicht werden, dass das elektrische Nahfeld und dadurch bedingt das Kristallwachstum beeinflusst wird. Letzteres kann in überraschender Weise insbesondere ermöglicht werden durch die elektrischen Eigenschaften, nämlich die unterschiedlichen Suszeptibilitäten von Additiv und Elektrolytmatrix und Additiv und ferner bevorzugt einer Polarität beziehungsweise Polarisierbarkeit, insbesondere einer Bipolarität des Additivs.

Dabei kann die Strukturgröße heterogener Systeme aus mindestens zwei Materialien so gewählt werden, dass sich die Verteilung des elektrischen Feldes im Nahbereich der Elektrodenoberfläche, etwa durch eine Kombination der elektrischen Suszeptibilitäten und Strukturgröße in Abhängigkeit zum Abstand zur Elektrode und zur angestrebten Stromstärke, insbesondere in der Nähe einer metallischen Lithiumanode, beeinflussbar ist und sich vorzugsweise ein selbst organisierendes System an der Oberfläche der Anode ausbildet. Eine Selbstorganisation in elektrischer Hinsicht kann etwa stattfinden durch das Anlegen eines elektrischen oder magnetischen Felds, wie dieses etwa bei einem Ladevorgang auftritt, oder durch ein zusätzlich angelegtes Feld. Ferner verteilt sich das Additiv auf der Oberfläche sehr gleichmäßig, insbesondere, wenn diese in dem beschriebenen Größenbereich vorliegen, etwa wenn die Partikel in einer Flüssigkeit suspendiert auf die Oberfläche gegeben werden und die Oberfläche abtrocknet.

Das Additiv verdrängt das elektrische Feld gleichmäßig über die Oberfläche, dominant gegenüber von gegebenenfalls vorliegenden Oberflächendefekten. Die Li⁺-Ionen folgen dem elektrischen Feld, gelangen dicht an die Oberfläche und werden dort mit hoher Gleichmäßigkeit eingebaut. Die Diffusion der kleinen Li+-Ionen und damit der elektrische Widerstand wird dabei nicht oder zumindest nicht wesentlich behindert.

Es kann eine Selbstorganisation erfolgen durch Ausrichten des etwa als dipolare nanoskalige kugelförmige Partikel ausgestalteten Additivs im elektrischen Feld, welches etwa bei einem Ladevorgang entsteht, und eine Belegung der Lithium-Metalloberfläche durch das Additiv. Das Additiv bewirkt eine Ausbildung von regelmäßigen Feldstörungen, die das elektrische Nahfeld auf der Oberfläche vergleichmäßigen und so zu einer geordneten elektrolytischen Lithiumabscheidung führen. Dadurch kann die Dendritbildung verhindert oder zumindest signifikant reduziert werden.

Die Selbstorganisation kann dabei erfolgen etwa durch das beim Laden erzeugte Feld, etwa wenn das Additiv in einem Flüssigelektrolyten vorliegt, oder durch das Anwenden eines elektrischen oder magnetischen Felds bei der Herstellung des Elektrolyten, wenn dieser beispielsweise ein Festkörperelektrolyt ist, wie dies nachfolgend im Detail mit Bezug auf das Verfahren beschrieben ist.

Das Vorstehende wird insbesondere möglich, da das Additiv beziehungsweise die Strukturierung bei einem Arbeiten der Batterie und damit bei einem Abscheiden einer Anodenschicht, wie etwa einer Lithiumschicht, nicht unter dem Metall wie etwa dem Lithium ausgebildet wird und dort nur das Wachstum der ersten Kristalllage beeinflussen kann, sondern weil das Additiv und damit die "Strukturierung" beim Zyklisieren des Lithiums auf dem Abscheideprodukt mit nach oben wächst und das elektrische Nahfeld beeinflusst, etwa analog der SEI auf der Lithiummetalloberfläche.

Ein Einbau des Additivs in die Schicht findet nicht statt, da das Einbringen der Abstandshalter in entstehende Schichten oftmals nur in engen Prozessgrenzen erfolgt, etwa beschrieben in http://www.wotech-technical-media.de/womag/ausgabe/2012/11/25_womag_hansal_01_12/25_womag_hans al_01_12.php. Nicht jedes dispergierte Material wird in jede metallische Schicht eingebaut, da die Metallschicht dazu strebt, beim Kristallisieren ihr ideales Gitter auszubilden und ein Einbau somit durch Überwachsen der Partikel erfolgen muss. Es wurde gefunden, dass ein Überwachsen von bevorzugt glatten, runden beziehungsweise kugelförmigen inerten Partikeln kaum realisiert wird, da die wachsende Metallschicht die Partikel "nach oben" schiebt.

Für diesen hier vorgeschlagenen Ansatz reicht bereits eine kleine Menge an Additiv bezogen auf das Gesamtelektrolytvolumen aus, wie etwa in einem Bereich von kleiner oder gleich 10 Gew.-%, beispielsweise kleiner oder gleich 1 Gew.-%, etwa in einem Bereich von größer oder gleich 0,2 Gew.-% bis kleiner oder gleich 0,8 Gew.-%.

Grundsätzlich ist ferner zu sagen, dass die Dendrite bei metallischen Abscheidungen, bzw. die Kristallbildung allgemein von der Keimbildungsenergie abhängt. Die Keimbildungsenergie sollte auf der gesamten Oberfläche möglichst homogen sein. Das bedeutet, dass nicht nur die "erste Lage" der abgeschiedenen Atome, sondern auch jede neue Lage an Atomen möglichst identische Bedingungen vorfinden sollte. Nanoskalige Muster etwa auf einer strukturierten Elektrode, wie etwa auf einer Kupferfolie, können die Keimbildung im Nanometerbereich beeinflussen. Erfindungsgemäß ist demgegenüber jedoch von Vorteil, dass dieser Einfluss nach der Abscheidung von Lithium auf die Oberfläche auch nach einigen Nanometern erhalten bleibt und ein entsprechender Effekt effektiv ist auch bei technisch oftmals notwendigen Abscheidungen von Lithiumschichten im Mikrometer-Bereich. Würde auf eine nanostrukturierte Kupferfolie eine Lithiumfolie aufgelegt, wäre der Effekt überhaupt nicht vorhanden. Eine Strukturierung unter dem abgeschiedenen Lithium ist bei der Tendenz der Oberfläche des Lithiums Dendrite auszubilden nur bedingt effektiv. Dies kann durch die vorbeschriebene Ausgestaltung jedoch gerade verhindert werden, da das Additiv sich stets auf der Oberfläche befindet.

Beispielsweise wird das Additiv insbesondere eingebracht in einen flüssigen Elektrolyt, der insbesondere flüssig am Temperaturbetriebspunkt der Batterie sein kann, oder auch oder auf die Oberfläche einer Elektrode, vorzugsweise einer Anode, wie etwa einer metallischen Lithium- Anode.

Durch die vorbeschriebene Ausgestaltung können besonders hohe Stromdichten in Lithium-Ionen Batterien, insbesondere bei einem Ladevorgang, ermöglicht werden. Zyklisierungsverluste durch abgebrochene Dendrite, insbesondere in Zellen mit Lithium-Metall-Anode, können begrenzt werden, was eine besonders hohe Langzeitstabilität ermöglichen kann.

Darüber hinaus kann eine erhöhte Sicherheit ermöglicht werden durch reduziertes und/oder kontrolliertes Dendritenwachstum, so dass elektrische Kurzschlüsse vermieden werden.

Die vorbeschriebene Lösung kann dabei Vorteile bieten etwa gegenüber einer Strukturierung der Anode, da dort beispielsweise stets neue Dendrite in kleinen Näpfchen der Strukturierung wachsen. Dabei kann die zyklisierte Ladung für hohe Leistungen, wie etwa in automotiven Bereichen, zu klein und die Ladungsdichte zu gering sein. Dies kann durch die erfindungsgemäße Anwendung des Additivs jedoch gerade verhindert werden.

Damit es der durch das Additiv ausgebildeten Struktur besonders vorteilhaft ermöglicht wird, der vom Nanometer- in den Mikrometer-Maßstab wachsenden Lithium-Metalloberfläche zu folgen, wird vorzugsweise eine nanoskalige selbstorganisierende Struktur vorgeschlagen, indem das Additiv beispielsweise Partikel einer Größe in einem Bereich von kleiner oder gleich 1000µm aufweist beziehungsweise daraus besteht. Im Gegensatz zum Stand der Technik, bei dem die Strukturgröße fester oder clusterartiger Teilchen im Nanometerbereich in dem Elektrolyten keine Rolle spielt, können derartige Partikel im Rahmen der Erfindung somit gegebenenfalls von Wichtigkeit sein.

Besonders bevorzugt können die Partikel des Additivs eine hohe Oberflächenglätte aufweisen.

Beispielsweise kann das Additiv etwa kugelförmige Partikel aus einem Kunststoff, insbesondere aus Polyvinylidenfluorid (PVDF), aufweisen oder daraus bestehen. Insbesondere Polyvinylidenfluorid kann als Additiv besonders gut geeignet sein. Es kann auf verschiedenste Weise polarisiert werden und so die vorbeschriebenen Eigenschaften aufweisen beziehungsweise die vorteilhafte Effekte ermöglichen.

Im Detail hat PVDF unterschiedliche Kristallstrukturen, wobei PVDF in der Beta-Phase polar, wie insbesondere bipolar, ist, da in der Beta-Phase alle Fluor-Moleküle auf der einen Seite der C-Kette stehen, die Wasserstoff-Atome jedoch auf der anderen Seite angeordnet sind. Beispielsweise können PVDF-Kugeln nanoskalig und polar erzeugbar sein gemäß KIT, Kaiserslautern, Claustal-Zellerfeld: Simone Wolff, Sabine Beuermann, Michael Türk; "Crystal phase transformation of a into b phase poly(vinylidene fluoride) via particle formation caused by rapid expansion of supercritical solutions" DOI: 10.1039/C5RA12142F, veröffentlicht unter
http://pubs.rsc.org/en/Content/ArticleHtml/2015/RA/c5ra12142f.

Ferner kann ein Additiv verwendet werden wie etwa das PVDF welches erwerblich ist unter dem Namen ARKEMA HSV 900, das nachträglich polarisiert werden kann, etwa nach "Manufacturing of Poly(vinylidene fluoride) and Evaluation of its Mechanical Properties", Daniel M. Esterly Virginia Polytechnic Institute and State University, 2002, Blacksburg, Virginia; veröffentlicht unter https://theses.lib.vt.edu/theses/available/etd-08212002-093930/unrestricted/Desterly.pdf. Dementsprechend kann PVDF etwa unter Einwirkung eines elektrischen Feldes in einer beispielhaften Größenordnung von 20MV/m und unter Temperatureinfluss etwa in einem Bereich von ungefähr 100°C polarisiert werden. Grundsätzlich ist die Herstellung von polarisierten PVDF-Partikeln dem Fachmann wohlbekannt.

Weiterhin ist die Einstellung elektrischer Eigenschaften von Nanopartikeln beschrieben in NanoDielectrics, DOI: 10.1109/T-DEI.2008.4446750, "The mechanisms leading to the useful electrical properties of polymer", Nanodielectrics R. C. Smith ; Rensselaer Polytech. Inst, Troy ; C. Liang ; M. Landry ;J. K. Nelson et al., sowie in "Polymer nanocomposite dielectrics-the role of the interface" DOI: 10.1109/TDEI.2005.1511089, M. Roy ; Rensselaer Polytech. Inst., Troy, NY, USA ; J. K. Nelson ; R. K. MacCrone ; L. S. Schadler, IEEE Transactions on Dielectrics and Electrical Insulation, Vol. 12, No. 4, 629.

Bezüglich der vorbeschriebenen Sekundärbatterie sind dabei grundsätzlich die verschiedensten Varianten denkbar. So können etwa verschiedenste Zellvarianten möglich sein, wie etwa Flüssig-Elektrolyt mit metallischer Lithium-Anode, Festelektrolyt mit metallischer Lithium-Anode, Festelektrolyt mit flüssig gefülltem Separator und metallischer Lithium-Anode, wobei die vorstehenden Beispiele nicht beschränkend zu verstehen sind.

Ferner kann ein Additiv mit geringerer elektrischer Suszeptibilität in einer insbesondere kontinuierlichen Matrix des Elektrolyt mit relativ höherer elektrischer Suszeptibilität verwendet werden oder kann ein Additiv mit höherer elektrischer Suszeptibilität in einer insbesondere kontinuierlichen Matrix des Elektrolyten mit relativ geringerer elektrischer Suszeptibilität vorgesehen sein. Unter der Elektrolytmatrix kann dabei der Hauptbestandteil des Elektrolyten verstanden werden, also der Bestandteil, der mit dem größten Anteil in Gewichtsprozent vorliegt.

Bezüglich des Additivs können beispielsweise bereits polarisierte nanoskalige kugelförmige Partikel, wie etwa PVDF in Beta-Kristallstruktur verwendet werden oder auch nicht polarisiertes PVDF, beispielsweise unter Auftragen auf die Anode mit anschließender Umwandlung des PVDF-Kristallgitters durch die nach Stand der Technik bekannten Methoden, wie etwa Erwärmung und Aufprägen eines elektrischen Feldes.

Die Anwendungen können etwa betreffen Lithium-Ionen Sekundärzellen, insbesondere mit metallischer Lithium-Anode mit Flüssigelektrolyt oder Festelektrolyt, Lithium-Ionen Sekundärzellen mit graphithaltiger Anode zur Vermeidung von Dendritenwachstum oder auch Brennstoffzellen, wie etwa in Flüssig-Brennstoffzellen.

Bezüglich des Additivs kann neben einer Partikelform es ebenfalls ermöglicht werden, dass das Additiv faserförmig ausgestaltet ist. Diesbezüglich kann das Additiv etwa Nanofasern, wie sie aus dem Electrospinning gewonnen werden können, etwa als Vlies, umfassen. Diesbezüglich kann etwa verwiesen werden auf die Internetveröffentlichung
"http.//electrospintech.com/products.html#.V5I1nfGWtut'. Derartige Fasern können insbesondere einen Durchmesser von kleiner oder gleich 1000 µm aufweisen.

Hinsichtlich weiterer Vorteile und technischer Merkmale der vorbeschriebenen Sekundärbatterie wird auf die nachfolgende Beschreibung des Verfahrens, des Elektrolyt, die Figuren sowie die Beschreibung der Figuren verwiesen, und umgekehrt.

Die vorliegende Erfindung betrifft ferner ein Verfahren zum Herstellen einer Sekundärbatterie, aufweisend die Verfahrensschritte:
a) Bereitstellen einer Anordnung aus einer Anode, einer Kathode und gegebenenfalls einem Separator;
b) Bereitstellen eines Elektrolyten, wobei der Elektrolyt wie insbesondere eine Elektrolytmatrix eine elektrische Suszeptibilität aufweist, wobei in dem Elektrolyt ein Additiv angeordnet ist, wobei das Additiv in dem Elektrolyt unlöslich ist, vorzugsweise polar oder polarisierbar ist und eine zu dem Elektrolyt beziehungsweise der Elektrolytmatrix verschiedene elektrische Suszeptibilität aufweist; und
c) Anordnen des Elektrolyten in Kontakt mit wenigstens einer Elektrode. Dabei können die Verfahrensschritte a) bis c) grundsätzlich in der beschriebenen Reihenfolge oder in einer davon abweichenden Reihenfolge durchgeführt werden.

Diese Ausgestaltung dient beispielsweise dem Herstellen einer Sekundärbatterie, wie diese vorstehend im Detail beschrieben ist. Bezüglich der Ausgestaltung der Elektroden, gegebenenfalls des Separators und des Elektrolyten mit dem Additiv wird auf die vorstehende Beschreibung verwiesen.

Dabei kann es grundsätzlich bei jeglicher Ausbildung einer Sekundärbatterie wie vorstehend beschrieben und bei jedem Verfahren möglich sein, dass ein Additiv, wie etwa ein nanoskaliges Material mit geringerer elektrischer Suszeptibilität in einer kontinuierlichen Matrix mit relativ höherer elektrischer Suszeptibilität verwendet wird, oder auch umgekehrt, also dass ein Additiv, wie etwa ein nanoskaliges Material, mit höherer elektrischer Suszeptibilität in einer kontinuierlichen Matrix mit relativ geringerer elektrischer Suszeptibilität verwendet wird.

Das Einbringen in die Sekundärbatterie kann dabei beispielsweise erfolgen durch Auftragen des Additivs wie etwa der dipolaren Nano-Materialien auf eine oder beide Elektroden, durch Auftragen des Additivs wie etwa der dipolaren Nano-Materialien auf den Separator, oder durch Auftragen beziehungsweise Einbringen des Additivs wie etwa dipolaren Nano-Materialien in den Elektrolyten mit anschließendem Einbringen der Elektrolyt-Additiv-Mischung in die Zelle, wie dies nachfolgend beschrieben ist.

Beispielsweise kann es vorgesehen sein, dass Verfahrensschritt c) vor Verfahrensschritt a) erfolgt, wobei bei Verfahrensschritt c) der Elektrolyt mit dem Additiv auf wenigstens eines von einer Elektrode und dem Separator aufgebracht wird. Dies kann beispielsweise realisiert werden, indem eine beispielsweise fluide oder pastöse Elektrolyt-Additiv-Mischung auf wenigstens eine Elektrode, etwa die Anode, und/oder den Separator aufgebracht und anschließend getrocknet beziehungsweise gehärtet wird. Alternativ kann ein fester Film aufweisend einen Festkörperelektrolyt und das Additiv auf die wenigstens eine Elektrode oder den Separator aufgebracht werden.

Alternativ kann es vorgesehen sein, dass Verfahrensschritt c) nach Verfahrensschritt a) erfolgt, wobei der Elektrolyt ein Festkörperelektrolyt oder ein flüssiger Elektrolyt sein kann. In dieser Ausgestaltung kann ein Flüssigelektrolyt in eine Batteriezelle gegossen werden oder kann ein Festkörperelektrolyt auf eine Elektrode aufgebracht werden.

Es kann weiterhin für einen besonders vorteilhaften Effekt der Nahfeldbeeinflussung von Vorteil sein, dass das Additiv im Rahmen des Verfahrens einem elektrischen oder magnetischen Feld ausgesetzt wird. Dies kann insbesondere dann von Vorteil sein, wenn das Additiv in einem Festelektrolyten angeordnet ist und hierdurch eine elektrische Ausrichtung des Additivs etwa bei einem Verfestigen des Elektrolyt während der Herstellung erfolgen kann.

Im Detail kann in einer bevorzugten spezifischen Ausgestaltung es beispielsweise vorgesehen sein, dass eine insbesondere pastöse oder fluide Mischung aus einem aufgeschmolzenen oder gelösten elektrisch leitfähigen Polymer und dem gegebenen polarisierten Additiv erzeugt wird, diese Mischung auf wenigstens eines von einer Elektrode und dem Separator aufgetragen wird, und das Additiv durch ein elektrisches und/oder magnetisches Feld ausgerichtet beziehungsweise polarisiert wird bei einem Verfestigen der Mischung.

Im Detail kann es in dieser Ausgestaltung vorgesehen sein, dass zunächst etwa nanoskaliges und gegebenenfalls polarisiertes PVDF mit leitfähigem Polymer wie PEO, gegebenenfalls mit Polystyrol, vermischt wird, etwa unter Aufschmelzen oder Mischen mit einem Lösemittel für das leitfähige Polymer. Anschließend wird die so erzeugte insbesondere pastöse oder fluide Mischung als ein Polymerfilm auf wenigstens eine Elektrode, wie insbesondere auf die Lithiumanode, oder auf den Separator aufgetragen. Der Separator kann etwa vom Membrantyp sein, etwa mit Poren die durch einen Flüssigelektrolyten gefüllt werden, oder es kann ein Festelektrolyt sein, der etwa aus Polyethylenoxid und Polystyrol ausgestaltet ist.

Anschließend kann das Additiv, wie etwa die Partikel des Additivs beziehungsweise die Moleküle desselben, durch elektrische und/oder magnetische Felder, insbesondere beim Erstarren der Matrix, wie etwa bei einem Trocknen des Films, beim Kühlen des Films nach dem Warmumformen, etwa durch ein Kalandrieren oder Extrudieren, ausgerichtet werden, um ein isotrope oder anisotrope Ausrichtung zu erreichen.

In einer weiteren spezifischen Ausgestaltung kann es beispielsweise vorgesehen sein, dass als Elektrolyt ein Flüssigelektrolyt verwendet wird, der das Additiv als Füllstoff aufweist, und der wenigstens eine Elektrode kontaktierend angeordnet wird. Beispielsweise kann der Elektrolyt in eine Batteriezelle gefüllt werden und dabei sowohl die Anode als auch die Kathode kontaktieren. Ferner kann der Elektrolyt in Poren eines zwischen den Elektroden angeordneten Separators angeordnet werden.

Anschließend kann sich das Additiv bei Anlegen eines elektrischen Feldes, welches etwa bei einem Ladevorgang auftritt, selbst organisieren, wie dies vorstehend beschrieben ist, was zu den vorbeschriebenen Vorteilen führen kann.

In einer weiteren Ausgestaltung kann es vorgesehen sein, dass eine Schicht aufweisend ein elektrisch leitfähiges Polymer und das polarisierte Additiv erzeugt wird, und die Schicht wenigstens eine Elektrode kontaktierend angeordnet wird. In dieser Ausgestaltung wird somit durch die Schicht ein Festelektrolyt verwendet, in dem das Additiv angeordnet ist. Entsprechend kann die Schicht wenigstens eine Elektrode, bevorzugt wenigstens die Anode, kontaktierend angeordnet werden.

Im Detail kann es in dieser Ausgestaltung vorgesehen sein, dass zunächst das Additiv, wie insbesondere nanoskaliges und gegebenenfalls polarisiertes PVDF mit einem leitfähigen Polymer, beispielsweise Polyethylenoxid PEO gegebenenfalls mit Polystyrol vermischt wird. Dies kann beispielsweise realisierbar sein, indem das elektrisch leitfähige Polymer gelöst oder aufgeschmolzen wird und mit dem festen PVDF vermischt wird. Durch Abkühlen oder Evaporieren des Lösungsmittels kann so eine Schicht beziehungsweise ein mit nanoskaligen Partikeln gefüllter Film entstehen, der in eine Lithium-Ionen Sekundärzelle eingebaut werden kann, insbesondere unter Ausbildung einer Zelle mit Festkörperelektrolyt mit Additiv direkt auf der Anode, die etwa als Lithium-Anode ausgestaltet sein kann.

Dabei kann ein Ausrichten beziehungsweise ein Polarisieren der nanoskaligen Partikel durch elektrische und/oder magnetische Felder beim Erstarren der Matrix, wie etwa beim Trocknen des Films, beim Kühlen des Films nach dem Warmumformen, etwa bei einem Kalandrieren oder Extrudieren, realisierbar sein, um ein isotrope oder anisotrope Ausrichtung zu erreichen.

In einer weiteren Ausgestaltung kann es vorgesehen sein, dass eine fluide oder pastöse Mischung aus einem Polymerelektrolyten und dem Additiv bereitgestellt wird, diese Mischung auf wenigstens eine Elektrode aufgetragen wird, und anschließend die Batteriezelle mit der wenigstens einen Elektrode bestückt wird.

Im Detail kann es in dieser Ausgestaltung zunächst eine fluide oder pastöse Mischung aus einem Polymerelektrolyten und dem Additiv bereitgestellt werden. Dies kann beispielsweise realisierbar sein unter Ausbildung einer Slurry unter Einbringen des Additivs insbesondere als nanoskalige Kugeln in eine Slurry aus Lösemittel oder in einen Polymerelektrolyten. Anschließend kann ein Auftragen des Additivs auf eine oder beide Elektrodenoberflächen vor der Montage der Zelle gegebenenfalls unter vorläufigem Fixieren für das Handhaben ausgeführt werden. Anschließen kann sich ein Schritt des Entfernens des Lösemittels oder Erweichens oder Aufschmelzens des Polymerelektrolyten am Betriebspunkt vor oder nach Zusammenbau der Zelle anschließen, so dass das Additiv beweglich werden kann.

Hinsichtlich weiterer Vorteile und technischer Merkmale des vorbeschriebenen Verfahrens wird auf die Beschreibung der Sekundärbatterie, des Elektrolyt, die Figuren sowie die Beschreibung der Figuren verwiesen, und umgekehrt.

Gegenstand der vorliegenden Erfindung ist ferner ein Elektrolyt für eine Sekundärbatterie, wie diese vorstehend im Detail beschrieben ist, wobei in dem Elektrolyt ein Additiv vorgesehen ist, das in dem Elektrolyt unlöslich ist, das bevorzugt polar oder polarisierbar ist und das eine zu dem Elektrolyten beziehungsweise einer Elektrolytmatrix verschiedene elektrische Suszeptibilität aufweist.

Durch einen vorbeschriebenen Elektrolyt, der etwa als Fest- oder Flüssigelektrolyt ausgestaltet sein kann, kann eine Dendritbildung in einer Sekundärbatterie reduziert werden, was zu einer verbesserten Sicherheit und einer verbesserten Langzeitstabilität führen kann.

Hinsichtlich weiterer Vorteile und technischer Merkmale des vorbeschriebenen Elektrolyt wird auf die Beschreibung der Sekundärbatterie, des Verfahrens, die Figuren sowie die Beschreibung der Figuren verwiesen, und umgekehrt.

### Figuren

Weitere Vorteile und vorteilhafte Ausgestaltungen der erfindungsgemäßen Gegenstände werden durch die Zeichnungen veranschaulicht und in der nachfolgenden Beschreibung erläutert, wobei die beschriebenen Merkmale einzeln oder in einer beliebigen Kombination ein Gegenstand der vorliegenden Erfindung sein können, insoweit sich aus dem Kontext nicht eindeutig das Gegenteil ergibt. Dabei ist zu beachten, dass die Zeichnungen nur beschreibenden Charakter haben und nicht dazu gedacht sind, die Erfindung in irgendeiner Form einzuschränken. Es zeigen
- Fig. 1: eine schematische Ansicht darstellend eine Ausgestaltung einer defektfreien Sekundärbatterie gemäß dem Stand der Technik;
- Fig. 2: eine schematische Ansicht der Ausgestaltung aus Figur 1 mit einem Defekt an der Anode; und
- Fig. 3: eine schematische Ansicht einer Ausgestaltung einer Sekundärbatterie gemäß der Erfindung mit einem Defekt an der Anode.

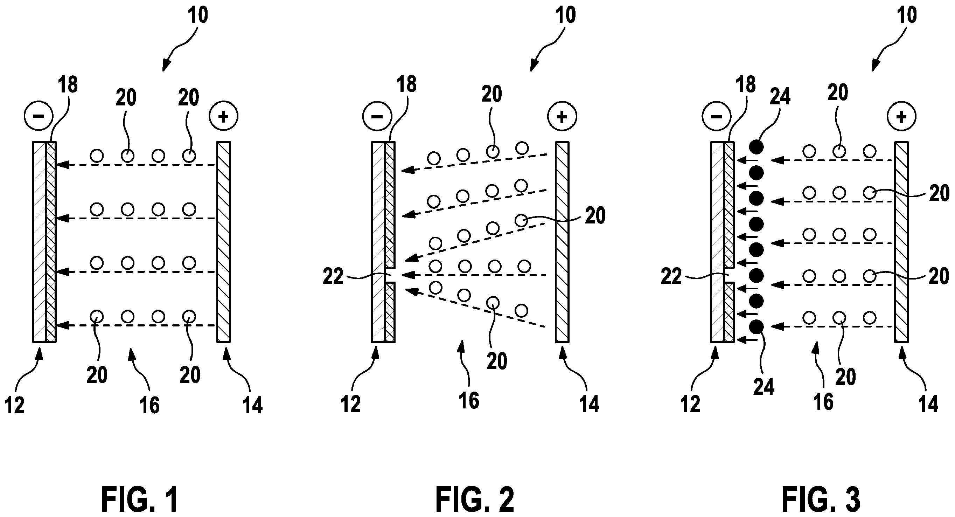

In der Figur 1 ist eine schematische Ansicht darstellend eine Ausgestaltung einer defektfreien Sekundärbatterie 10 gezeigt. Gemäß Figur 1 umfasst die Sekundärbatterie 10 eine Anode 12, eine Kathode 14 und einen dazwischen angeordneten Elektrolyt 16. Die Anode 12 kann beispielsweise aus Lithium ausgestaltet sein und eine Grenzschicht 18 (Solid Elektrolyte Interface, SEI) mit einem definierten Oberflächenwiderstand ausbilden. Es sind ferner Lithiumionen 20 gezeigt, welche zu der Anode 12 wandern, um dort ein Elektron aufzunehmen und sich als metallisches Lithium abzuscheiden. Dabei sind ferner elektrische Feldlinien als gestrichelte Linien gezeigt, welche senkrecht auf die Oberfläche der Anode 12 fallen.

In der Figur 2 ist eine entsprechende Anordnung gezeigt, bei der die Grenzschicht 18 einen Defekt 22 aufweist. Dadurch treffen die Feldlinien nicht mehr senkrecht auf die Anode 12, was im Bereich des Defekts 22 zu einer Dendritbildung führen kann.

Um dies zu verhindern ist im Elektrolyt 16, beispielsweise im Bereich der Anode 12, ein Additiv 24 vorgesehen, das in dem Elektrolyt 16 unlöslich ist, das bevorzugt polar oder polarisierbar ist und das eine zu dem Elektrolyten 16 verschiedene elektrische Suszeptibilität aufweist. Insbesondere ist es vorgesehen, dass das Additiv 24 kugelförmige Partikel aus einem Kunststoff, insbesondere aus Polyvinylidenfluorid, aufweist, wobei die Partikel einen Durchmesser in einem Bereich von kleiner oder gleich 1000 µm aufweisen. Durch die spezifischen Eigenschaften des Additivs 24 kann es ermöglicht werden, dass trotz des Defekts 22 die Feldlinien senkrecht auf die Anode 12 treffen und dadurch eine Dendritbildung verhindert wird.

Dabei weist die Ausgestaltung gemäß Figur 3 keinen zusätzlichen Separator auf, da dieser durch das Additiv 24 gebildet wird.

## Patentansprüche

1. Sekundärbatterie aufweisend eine Anode (12), eine Kathode (14) und gegebenenfalls einen zwischen Anode (12) und Kathode (14) angeordneten Separator, wobei ferner ein Elektrolyt (16) vorgesehen ist, der wenigstens eine von der Anode (12) und der Kathode (14) kontaktiert, und wobei in dem Elektrolyt (16) ein Additiv (24) vorgesehen ist, das in dem Elektrolyt (16) unlöslich ist und das eine zu einer Elektrolytmatrix des Elektrolyten (16) verschiedene elektrische Suszeptibilität aufweist, **dadurch gekennzeichnet, dass**
das Additiv (24) zumindest teilweise zwischen dem Separator und der Anode (12) oder zwischen dem Separator und der Kathode (14) angeordnet ist.

2. Sekundärbatterie nach Anspruch 1, **dadurch gekennzeichnet, dass** der Separator durch das Additiv (24) gebildet wird.

3. Sekundärbatterie nach Anspruch 1 oder 2, **dadurch gekennzeichnet, dass** das Additiv (24) insbesondere kugelförmige Partikel aus einem Kunststoff, insbesondere aus Polyvinylidenfluorid, aufweist, wobei die Partikel einen Durchmesser in einem Bereich von kleiner oder gleich 1000 µm aufweisen.

4. Sekundärbatterie nach Anspruch 1 oder 2, **dadurch gekennzeichnet, dass** das Additiv (24) faserartig mit einem Durchmesser in einem Bereich von kleiner oder gleich 1000 µm ausgestaltet ist.

5. Verfahren zum Herstellen einer Sekundärbatterie (10), aufweisend die Verfahrensschritte:
a) Bereitstellen einer Anordnung aus einer Anode (12), einer Kathode (14) und gegebenenfalls einem Separator;
b) Bereitstellen eines Elektrolyten (16), wobei der Elektrolyt (16) eine Elektrolytmatrix mit einer elektrischen Suszeptibilität aufweist, wobei in dem Elektrolyt (16) ein Additiv (24) angeordnet ist, wobei das Additiv (24) in dem Elektrolyt (16) unlöslich ist und eine zu der Elektrolytmatrix verschiedene elektrische Suszeptibilität aufweist; und
c) Anordnen des Elektrolyten (16) in Kontakt mit wenigstens einer Elektrode.

6. Verfahren nach Anspruch 5, **dadurch gekennzeichnet, dass** Verfahrensschritt c) vor Verfahrensschritt a) erfolgt, wobei bei Verfahrensschritt c) der Elektrolyt (16) mit dem Additiv (24) auf wenigstens eines von einer Elektrode und dem Separator aufgebracht wird.

7. Verfahren nach Anspruch 5, **dadurch gekennzeichnet, dass** Verfahrensschritt c) nach Verfahrensschritt a) erfolgt.

8. Verfahren nach einem der Ansprüche 5 bis 7, **dadurch gekennzeichnet, dass** das Additiv (24) im Rahmen des Verfahrens einem elektrischen oder magnetischen Feld ausgesetzt wird.

9. Elektrolyt für eine Sekundärbatterie (10) nach einem der Ansprüche 1 bis 4, **dadurch gekennzeichnet, dass** in dem Elektrolyt (16) ein Additiv (24) vorgesehen ist, das in dem Elektrolyt (16) unlöslich ist und das eine zu einer Elektrolytmatrix verschiedene elektrische Suszeptibilität aufweist.

## Claims

1. Secondary battery comprising an anode (12), a cathode (14) and optionally a separator arranged between anode (12) and cathode (14), where an electrolyte (16) which contacts at least one of the anode (12) and the cathode (14) is additionally provided and an additive (24) which is insoluble in the electrolyte (16) and has an electrical susceptibility which is different from an electrolyte matrix of the electrolyte (16) is provided in the electrolyte (16), **characterized in that** the additive (24) is arranged at least partly between the separator and the anode (12) or between the separator and the cathode (14).

2. Secondary battery according to Claim 1, **characterized in that** the separator is formed by the additive (24).

3. Secondary battery according to Claim 1 or 2, **characterized in that** the additive (24) comprises in particular spherical particles composed of a polymer, in particular of polyvinylidene fluoride, where the particles have a diameter in the range of smaller than or equal to 1000 µm.

4. Secondary battery according to Claim 1 or 2, **characterized in that** the additive (24) is fibrous with a diameter in the range of less than or equal to 1000 µm.

5. Process for producing a secondary battery (10), comprising the process steps:
a) provision of an arrangement comprising an anode (12), a cathode (14) and optionally a separator;
b) provision of an electrolyte (16), where the electrolyte (16) has an electrolyte matrix having an electrical susceptibility, where an additive (24) is arranged in the electrolyte (16), where the additive (24) is insoluble in the electrolyte (16) and has an electrical susceptibility different from the electrolyte matrix; and
c) arrangement of the electrolyte (16) in contact with at least one electrode.

6. Process according to Claim 5, **characterized in that** process step c) is carried out before process step a), where the electrolyte (16) with the additive (24) is applied to at least one of an electrode and the separator in process step c).

7. Process according to Claim 5, **characterized in that** process step c) is carried out after process step a) .

8. Process according to any of Claims 5 to 7, **characterized in that** the additive (24) is exposed to an electrical or magnetic field during the process.

9. Electrolyte for a secondary battery (10) according to any of Claims 1 to 4, **characterized in that** an additive (24) which is insoluble in the electrolyte (16) and has an electrical susceptibility different from an electrolyte matrix is provided in the electrolyte (16).

## Revendications

1. Batterie secondaire, comprenant une anode (12), une cathode (14) et éventuellement un séparateur disposé entre l'anode (12) et la cathode (14), un électrolyte (16) étant en outre présent, lequel est en contact avec au moins l'une parmi l'anode (12) et la cathode (14), et l'électrolyte (16) contenant un additif (24) qui est non soluble dans l'électrolyte (16) et qui possède une susceptibilité électrique différente de celle d'une matrice électrolytique de l'électrolyte (16), **caractérisée en ce que**
l'additif (24) est disposé au moins partiellement entre le séparateur et l'anode (12) ou entre le séparateur et la cathode (14).

2. Batterie secondaire selon la revendication 1, **caractérisée en ce que** le séparateur est formé par l'additif (24).

3. Batterie secondaire selon la revendication 1 ou 2, **caractérisée en ce que** l'additif (24) possède notamment des particules en forme de billes en une matière plastique, notamment en polyfluorure de vinylidène, les particules ayant un diamètre dans une plage inférieure ou égale à 1000 µm.

4. Batterie secondaire selon la revendication 1 ou 2, **caractérisée en ce que** l'additif (24) est de configuration fibreuse avec un diamètre dans une plage inférieure ou égale à 1000 µm.

5. Procédé de fabrication d'une batterie secondaire (10), comprenant les étapes de procédé suivantes :
a) fourniture d'un arrangement composé d'une anode (12), d'une cathode (14) et éventuellement d'un séparateur ;
b) fourniture d'un électrolyte (16), l'électrolyte (16) possédant une matrice électrolytique ayant une susceptibilité électrique, un additif (24) étant disposé dans l'électrolyte (16), l'additif (24) étant non soluble dans l'électrolyte (16) et possédant une susceptibilité électrique différente de celle de la matrice électrolytique ; et
c) arrangement de l'électrolyte (16) en contact avec au moins une électrode.

6. Procédé selon la revendication 5, **caractérisé en ce que** l'étape de procédé c) est exécutée avant l'étape de procédé a), lors de l'étape de procédé c) l'électrolyte (16) avec l'additif (24) étant appliqué sur au moins l'un parmi l'électrode et le séparateur.

7. Procédé selon la revendication 5, **caractérisé en ce que** l'étape c) est exécutée après l'étape a).

8. Procédé selon l'une des revendications 5 à 7, **caractérisé en ce que** dans le cadre du procédé, l'additif (24) est exposé à un champ électrique ou magnétique.

9. Électrolyte pour une batterie secondaire (10) selon l'une des revendications 1 à 4, **caractérisé en ce que** l'électrolyte (16) contient un additif (24) qui est non soluble dans l'électrolyte (16) et qui possède une susceptibilité électrique différente de celle d'une matrice électrolytique.
